# EUROPÄISCHE PATENTSCHRIFT

(11) **EP 2 623 737 B1**
(45) Veröffentlichungstag und Bekanntmachung des Hinweises auf die Patenterteilung: **09.03.2016**
(21) Anmeldenummer: 12195778.1
(22) Anmeldetag: 06.12.2012
(51) Int. Cl.: H04R 1/02, F01N 1/06, F01N 13/18, F16L 55/033

(54) **Aktiver Schalldämpfer**
Active silencer
Silencieux actif

(30) Priorität: 06.02.2012 DE 102012201725
(43) Veröffentlichungstag der Anmeldung: 07.08.2013
(73) Patentinhaber: Eberspächer Exhaust Technology GmbH & Co. KG, 66539 Neunkirchen (DE)
(72) Erfinder: Grupp, Johannes, 73072 Donzdorf (DE); Nicolai, Manfred, 73730 Esslingen (DE); Pommerer, Michael, 73066 Uhingen (DE); Krüger, Jan, 73730 Esslingen (DE); Wirth, Georg, 73230 Kirchheim/Teck (DE); Schlicht, Thomas, 73730 Esslingen (DE)
(74) Vertreter: BRP Renaud & Partner mbB Rechtsanwälte Patentanwälte Steuerberater

(56) Entgegenhaltungen:
- DE-A1-102008 018 085
- FR-A1- 2 329 929
- GB-A- 1 357 330
- JP-A- H07 091 222

## Beschreibung

Die vorliegende Erfindung betrifft einen aktiven Schalldämpfer für eine Abgasanlage einer Brennkraftmaschine, vorzugsweise eines Kraftfahrzeugs, mit den Merkmalen des Oberbegriffs des Anspruchs 1. Die vorliegende Erfindung betrifft außerdem einen Bausatz zum Herstellen derartiger Schalldämpfer.

Aus der DE 10 2008 018 085 A1 ist ein aktiver Schalldämpfer bekannt, der ein Gehäuse aufweist, das eine Oberschale sowie eine Unterschale besitzt und das einen Innenraum begrenzt. Der Schalldämpfer umfasst außerdem einen Lautsprecher, der im Innenraum angeordnet ist, wobei eine Membran des Lautsprechers mithilfe eines trichterförmigen Schallleitkanals akustisch mit einem Anschlussstutzen des Schalldämpfers verbunden ist. Mithilfe dieses Anschlussstutzens kann der Schalldämpfer an einen Abgas führenden Abschnitt der Abgasanlage, bspw. ein Abgasrohr, akustisch angeschlossen werden. Die akustische Kopplung ermöglicht eine Übertragung von Druckpulsationen, die mithilfe der Membran des Lautsprechers erzeugt werden können, von dieser Membran bis in den Abgasstrom der Abgasanlage. Mithilfe eines derartigen aktiven Schalldämpfers kann somit das Klangbild des im Abgas transportierten Schalls beeinflusst werden, wobei insbesondere durch Interferenzen bzw. durch Auslöschung bestimmte Frequenzen gezielt gedämpft werden können.

Beim bekannten Schalldämpfer ist der Schallleitkanal in einem separaten Schallleitkörper ausgebildet, der von der Unterschale umschlossen ist, derart, dass sich zwischen dem Schallleitkörper und der Unterschale ein unterer Hohlraum ausbildet. Die Oberschale umhüllt den Lautsprecher unter Ausbildung eines oberen Hohlraums, wobei sich der Lautsprecher an einer von der Membran abgewandten Seite mit seinem elektromagnetischen Antrieb an der Oberschale abstützt. Ferner ist beim bekannten Schalldämpfer eine separate Halterung vorgesehen, die einerseits an der Unterschale befestigt ist und an der andererseits der Lautsprecher mit seinem Käfig befestigt ist. Die Halterung definiert innerhalb des Gehäuses einen Bypass, der den oberen Hohlraum mit dem unteren Hohlraum akustisch verbindet. Auf diese Weise kann das Rückvolumen des Lautsprechers bis in den unteren Hohlraum der Unterschale vergrößert werden.

Beim bekannten Schalldämpfer ist die Oberschale außerdem mit einem Kabelanschluss ausgestattet, durch den ein Kabel zum Ansteuern des Lautsprechers hindurchführbar ist und der gleichzeitig als Druckausgleichsöffnung ausgestaltet sein kann.

Bei einem gattungsgemäßen aktiven Schalldämpfer, wie er aus der FR 2 329 929 A bekannt ist, ist der Schallleitkanal in der Unterschale integral ausgeformt.

Die vorliegende Erfindung beschäftigt sich mit dem Problem, für einen Lautsprecher der eingangs genannten Art eine verbesserte Ausführungsform anzugeben, die sich insbesondere durch eine vergleichsweise preiswerte Herstellbarkeit auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Schallleitkanal in die Unterschale zu integrieren. In der Folge kann auf einen separaten Schallleitkörper zur Realisierung des Schallleitkanals verzichtet werden. Hierdurch entfällt zumindest ein Bauteil gegenüber einem herkömmlichen Schalldämpfer, nämlich der Schallleitkörper. Gleichzeitig entfällt bei einem erfindungsgemäßen Schalldämpfer somit ein Hohlraum zwischen Unterschale und Schallleitkörper, so dass die Unterschale im Bereich des Schallleitkanals beim erfindungsgemäßen Schalldämpfer nicht zum Rückvolumen des Lautsprechers beiträgt. Hierdurch baut die Unterschale extrem kompakt, was die Unterbringung des Schaldämpfers in den stets beengten Einbausituationen, insbesondere eines Kraftfahrzeugs, vereinfacht.

Zweckmäßig erfolgt die mechanische und akustische Anbindung des Schallleitkanals an einen Abgas führenden Abschnitt der Abgasanlage im montierten Zustand des Schalldämpfers über den Anschlussstutzen, wodurch der Schalldämpfer insbesondere von einer Austrittsöffnung der Abgasanlage entfernt angeordnet werden kann.

Der Schallleitkanal ist vorzugsweise trichterförmig ausgestaltet. In der Folge verjüngt sich der Querschnitt des Schallleitkanals entlang der Schallausbreitungsrichtung vom Lautsprecher bzw. von der Membran bis zum Anschlussstutzen. Folglich kann im Gehäuse ein vergleichsweise großer Lautsprecher mit entsprechend großer Membran montiert werden, wodurch insbesondere Schallwellen mit tieferen Frequenzen generiert und in Richtung Abgasstrom abgestrahlt werden können.

Entsprechend einer vorteilhaften Ausführungsform ist der Lautsprecher an der Unterschale befestigt. Insbesondere wird dabei eine direkte Befestigung des Lautsprechers an der Unterschale bevorzugt. Zweckmäßig besitzt der Lautsprecher einen Käfig, an dem einerseits die Membran gehalten ist und der andererseits einen elektromagnetischen Antrieb zum Antreiben der Membran trägt. Der Lautsprecher ist dann zweckmäßig mithilfe seines Käfigs an der Unterschale befestigt. Grundsätzlich sind dabei beliebige geeignete Befestigungsmittel verwendbar. Zweckmäßig sind beispielsweise Verschraubungen.

Weiterhin kann es von Vorteil sein, den Lautsprecher ausschließlich an der Unterschale zu befestigen, so dass die Oberschale keinen Beitrag zur Fixierung des Lautsprechers am Gehäuse leistet. Entsprechend einer weiteren vorteilhaften Ausführungsform kann dabei vorgesehen sein, dass der Lautsprecher im Gehäuse kontaktfrei zur Oberschale angeordnet ist. Somit können Wechselwirkungen zwischen Lautsprecher und Oberschale vermieden werden. Gleichzeitig kann dadurch die Geometrie der Oberschale weitgehend unabhängig vom Lautsprecher gewählt werden. Zum einen lässt sich dadurch der von der Oberschale umhüllte Hohlraum gezielt so dimensionieren, dass für den Lautsprecher ein ausreichendes Rückvolumen bereitgestellt werden kann. Ferner begünstigt diese Bauweise eine geometrische Adaption der Oberschale an die jeweilige Einbausituation. Somit lassen sich vorhandene Einbauräume besser ausnutzen.

Eine andere vorteilhafte Ausführungsform schlägt vor, den Lautsprecher mit Hilfe der Oberschale gegen die Unterschale zu klemmen. Mit anderen Worten wird dabei erst durch das Befestigen der Oberschale an der Unterschale der Lautsprecher an der Unterschale festgelegt, wobei Oberschale und Unterschale eine Klemmfixierung für den Lautsprecher bilden. Zweckmäßig übergreift eine Niederhalterkontur der Oberschale einen Außenrand des Lautsprechers, z.B. einen Außenrand des Käfigs des Lautsprechers, und drückt diesen gegen eine Anlagefläche der Unterschale. Die Niederhalterkontur kann eine geschlossen umlaufende Schulter sein oder mehrere in der Umfangsrichtung verteilt angeordnete separate Niederhalter umfassen. Die Niederhalterkontur ist dabei zweckmäßig integral an der Oberschale ausgebildet. Auch hier ist eine Ausführungsform bevorzugt, bei welcher der Lautsprecher außerhalb der Klemmfixierung keinen Kontakt zur Oberschale besitzt, so dass sich auch hier die vorstehend genannten Vorteile ergeben.

Gemäß einer vorteilhaften Ausführungsform kann die Unterschale wenigstens eine Druckausgleichsöffnung aufweisen, die den Innenraum mit einer Umgebung des Gehäuses verbindet. Mit Hilfe einer derartigen Druckausgleichsöffnung lassen sich statische Druckdifferenzen zwischen der Umgebung und dem Innenraum ausgleichen. Derartige Druckdifferenzen, die bspw. durch Temperaturänderungen entstehen können, beeinflussen die statische Auslenkung der Membran und somit die Frequenz des abgestrahlten Schalls. Außerdem kann eine dauerhafte Auslenkung der Membran aus ihrer Neutralstellung aufgrund von Kriechvorgängen zu einer bleibenden Deformation der Membran führen. Durch die Integration der Druckausgleichsöffnung in die Unterschale wird gleichzeitig die Funktionalität der Unterschale erhöht, was es vereinfacht, für die Oberschale eine möglichst preiswerte Herstellbarkeit zu erzielen.

Entsprechend einer Weiterbildung kann die jeweilige Druckausgleichsöffnung mit einer gasdurchlässigen und flüssigkeitsdichten Membran verschlossen sein. Mithilfe einer derartigen Membran kann bspw. ein Wassereintrag in den Innenraum des Schalldämpfers, bspw. durch Spritzwasser, weitgehend ausgeschlossen werden, während gleichzeitig ein ausreichender Druckausgleich möglich ist. Ferner kann durch eine derartige Membran Kondensat, das sich im Innenraum ausbilden kann, ausdampfen.

Vorzugsweise kann die jeweilige Membran in den Werkstoff der Unterschale eingebettet sein. Vorzugsweise kann die Unterschale aus einem Kunststoff hergestellt werden, wobei ein Spritzformen bevorzugt ist. Beim Spritzformen der Unterschale kann die jeweilige Membran im Bereich der auszuformenden Öffnung bereits in die jeweilige Spritzform eingelegt sein, so dass die Unterschale quasi an die jeweilige Membran angespritzt wird, so dass die Membran randseitig dann in den Werkstoff der Unterschale eingebettet ist. Hierdurch wird gleichzeitig die Funktionalität der Unterschale verbessert, indem bspw. der mit Hilfe der Membran geschaffene Spritzschutz in die Unterschale integriert wird.

Erfindungsgemäß ist vorgesehen, dass die Unterschale einen Kabelanschluss aufweist, über den der Lautsprecher ansteuerbar ist. Auch hierdurch wird die Funktionalität der Unterschale erhöht, wodurch gleichzeitig die Möglichkeit einer preiswerten Herstellbarkeit der Oberschale verbessert wird. Ein derartiger Kabelanschluss kann im einfachsten Fall als Kabeldurchführung ausgestaltet sein, durch welche ein entsprechendes Kabel zum Ansteuern des Lautsprechers durch die Unterschale hindurchgeführt werden können. Ferner ist es möglich, den Kabelanschluss als Steckerbauteil oder Buchsenbauteil auszugestalten, das elektrische Kontakte besitzt, die im Innenraum des Schalldämpfers über eine interne Verkabelung mit entsprechenden Kontakten des Lautsprechers verbunden sind. An das Buchsenbauteil bzw. an das Steckerbauteil kann dann ein komplementäres Bauteil einer externen Verkabelung angeschlossen werden. Der jeweilige Kabelanschluss kann dabei integral in der Unterschale ausgeformt sein. Sofern zur Realisierung des Kabelanschlusses separate Bauteile, wie z.B. elektrische Kontakte oder ein Buchsenelement oder ein Steckerelement, erforderlich sind, können diese vom Werkstoff der Unterschale umspritzt sein bzw. darin eingebettet sein.

Bei der Unterschale handelt es sich bevorzugt um ein Kunststoffbauteil, das gemäß einer besonders vorteilhaften Ausführungsform aus einem verstärkten Kunststoff hergestellt sein kann. Der Kunststoff kann dabei faserverstärkt sein, wobei eine Glasfaserverstärkung bevorzugt wird. Der Kunststoff kann außerdem kurzfaserverstärkt sein, wobei eine Kurzglasfaserverstärkung bevorzugt wird. Eine derartige Kurzfaserverstärkung eignet sich zum Spritzformen der Unterschale aus dem Kunststoff. Die Unterschale besitzt durch die Verwendung des verstärkten Kunststoffs eine vergleichsweise hohe Stabilität. Ferner lässt sich die Unterschale hierdurch insbesondere auch mit einer erhöhten Temperaturbeständigkeit ausstatten. Hierdurch eignet sich die Unterschale in besonderer Weise zur Integration bzw. zum Anbau möglichst vieler Komponenten des Schalldämpfers.

Ferner lässt sich die Unterschale dadurch besser an einer dem heißen Abgasstrang zugewandten Seite des Schalldämpfers montieren. Hierzu ist die Unterschale mit dem Anschlussstutzen ausgestattet, über den der Schalldämpfer an einen Abgas führenden Abschnitt der Abgasanlage akustisch angeschlossen werden kann.

Zweckmäßig ist die Oberschale im montierten Zustand, in dem der Schalldämpfer an die Abgasanlage angebaut ist, ohne Kontakt zu einem Abgas führenden Abschnitt der Abgasanlage, an den der Anschlussstutzen angebaut ist. Insbesondere befindet sich die Oberschale dabei an einer von dem Abgas führenden Abschnitt abgewandten Seite der Unterschale. Hierdurch ist es möglich, die Oberschale aus einem vergleichsweise preiswerten Kunststoff herzustellen. Da auch die Unterschale nur indirekt, nämlich über den Anschlussstutzen, an den Abgas führenden Abschnitt angeschlossen ist, kann auch die Unterschale im Montagezustand des Schalldämpfers ohne direkten Kontakt zu einem Abgas führenden Abschnitt der Abgasanlage angeordnet sein.

Entsprechend einer anderen vorteilhaften Ausführungsform können der Lautsprecher und die Oberschale in derselben Montagerichtung an die Unterschale angebaut sein. Hierdurch ergibt sich eine günstige Zugänglichkeit der Montagestellen, was die Herstellung des Schalldämpfers vereinfacht.

Gemäß einer weiteren vorteilhaften Ausführungsform kann die Unterschale einen geschlossen umlaufenden Flansch aufweisen, der bezüglich einer Montagerichtung, in welcher der Lautsprecher an die Unterschale angebaut ist, radial nach außen absteht und an dem die Oberschale mit einem geschlossen umlaufenden Rand bezüglich der Montagerichtung axial abgestützt und/oder befestigt ist. Hierdurch ergibt sich eine besonders einfache Befestigungsmöglichkeit zwischen Oberschale und Unterschale, die einerseits tolerant für thermische Dehnungseffekte ist und andererseits vergleichsweise große Herstellungstoleranzen zulässt.

Entsprechend einer vorteilhaften Weiterbildung können der Lautsprecher und die Oberschale am Flansch im Bereich einer gemeinsamen Befestigungsebene befestigt sein, die sich radial zur Montagerichtung erstreckt. Hierdurch baut die Unterschale extrem kompakt. Bei dieser Bauweise wird das Rückvolumen des Lautsprechers nahezu ausschließlich durch die Geometrie der Oberschale bestimmt. Alternativ ist auch eine Ausführungsform denkbar, bei welcher der Lautsprecher und die Oberschale in verschiedenen Ebenen am Flansch der Unterschale befestigt sind, die in der Montagerichtung voneinander beabstandet sind und jeweils senkrecht zur Montagerichtung verlaufen. Hierzu kann der Flansch bspw. einen umlaufenden Kragen aufweisen, der bzgl. der Montagerichtung axial absteht und randseitig die Montage der Oberschale ermöglicht. Bei einer derartigen Ausführungsform umschließt besagter Rand des Flansches einen Raum, der in diesem Fall zum Rückvolumen des Lautsprechers beiträgt.

Vorteilhaft kann vorgesehen sein, dass innen oder außen an der Unterschale ein Drucksensor, z.B. ein Mikrophon, angeordnet ist. Der Drucksensor ist an eine Druckübertragungsleitung angeschlossen, die bei an die Abgasanlage angebautem Schalldämpfer an einen Abschnitt der Abgasanlage angeschlossen ist, der sich bezüglich der Abgasströmung in der Abgasanlage stromab des Anschlussstutzens befindet. Die Druckübertragungsleitung ermöglicht eine akustische Verbindung zwischen den Abgasströmungspfad der Abgasanlage stromab des Anschlussstutzens und dem Drucksensor. Die mit Hilfe des Drucksensors erfassten Signale ermöglichen eine Kontrolle der Effektivität der durchgeführten Luftschallbeeinflussung bzw. Luftschalldämpfung, insbesondere nach Art einer Regelung. Durch die Unterbringung des Drucksensors an oder in der Unterschale kann die Funktionsdichte der Unterschale vergrößert werden. Bei einer außerhalb des Lautsprechers angeordneten Steuerung zum Ansteuern des Lautsprechers können die elektrischen Signale des Drucksensors durch dieselbe Verkabelung geleitet werden, über die auch der Lautsprecher angesteuert wird. Sofern jedoch die Steuerung im Gehäuse, vorzugsweise an oder in der Unterschale, untergebracht ist, erfolgt die Signalübertragung innerhalb des Schalldämpfers, was den Verkabelungsaufwand reduziert.

Insbesondere kann eine Steuerung zum Ansteuern des Lautsprechers in einer Kavität angeordnet sein, die an einer dem Innenraum des Gehäuses bzw. dem Lautsprecher zugewandten Innenseite der Unterschale ausgebildet ist. Vorzugsweise ist eine Öffnung der Kavität durch einen Deckel verschlossen, der als Hitzeschutz ausgestaltet ist und zum Beispiel aus einem Metall bzw. aus einer Metalllegierung besteht. Beispielsweise ist besagte Kavität in eine den Schalleitkanal begrenzende Wand eingelassen. Der Deckel bildet dann vorzugsweise einen Abschnitt dieser Wand.

Sofern Drucksensor und Steuerung am oder im Gehäuse bzw. an oder in der Unterschale untergebracht sind, reicht eine gemeinsame vom Gehäuse kommende bzw. aus dem Gehäuse herausgeführte Verkabelung aus, um die elektrischen Komponenten mit Strom zu versorgen. Zusätzlich kann in diese gemeinsame Verkabelung auch ein Signalkabel integriert sein, das die Einspeisung externer Signale, z.B. von Fahrerwünschen, ermöglicht, um den Sound und/oder die Lautstärke zu beeinflussen.

Während der Lautsprecher, der üblicherweise einen metallischen Käfig besitzt, zweckmäßig mit der Unterschale verschraubt oder verklemmt ist, kann die Oberschale mit der Unterschale verklebt oder verschweißt werden. Alternativ ist jedoch auch hier eine Schraubverbindung denkbar.

Bei einer anderen Ausführungsform kann der Anschlussstutzen durch ein bezüglich der Unterschale separates Rohrstück gebildet sein, das beabstandet zum Lautsprecher an der Unterschale angeordnet ist. Während die Unterschale vorzugsweise ein Kunststoffteil ist, handelt es sich beim Rohrstück vorzugsweise um ein Metallbauteil, das auf geeignete Weise mit einem Abgas führenden Abschnitt der Abgasanlage verbunden werden kann, der regelmäßig ebenfalls aus Metall hergestellt ist. Das Rohrstück kann bspw. in die Unterschale eingesetzt sein. Ebenso ist es möglich, das Rohrstück bereits bei der Herstellung der Unterschale in einer Spritzform anzuordnen, so dass das Rohrstück vom Kunststoff der Unterschale umspritzt ist. In diesem Fall ist das Rohrstück in den Werkstoff der Unterschale eingebettet.

Ferner kann am Gehäuse eine Halterung vorgesehen sein, mit deren Hilfe das Gehäuse an einem Bauteil der Abgasanlage befestigt werden kann. Eine derartige Halterung ist zweckmäßig bzgl. des Gehäuses ein separates Bauteil. Insbesondere ist die Halterung aus Metall hergestellt. Bevorzugt wird dabei eine Ausführungsform, bei welcher die Halterung an der Unterschale befestigt ist. Gemäß einer bevorzugten Ausführungsform erfolgt die Befestigung des Schalldämpfers an der Abgasanlage ausschließlich über die Unterschale, wodurch die Oberschale von dieser Aufgabe vollständig entlastet ist und dementsprechend preiswert herstellbar ist.

Gemäß einer anderen vorteilhaften Ausführungsform kann die Unterschale, abgesehen von der Oberschale, also bis auf die Oberschale, alle wesentlichen Komponenten des Schalldämpfers aufweisen und mit diesen eine vormontierbare, quasi modulare Einheit bilden, die durch Anbringen der Oberschale zum Schalldämpfer komplettierbar ist. Mit anderen Worten, der Schalldämpfer ist mit Hilfe der Unterschale so weit vormontierbar, dass nur noch die Oberschale daran angebracht werden muss, um den Schalldämpfer zu komplettieren. Auf diese Weise wird ein modulares System geschaffen, das es insbesondere ermöglicht, mit Hilfe baugleicher Unterschalen im Wesentlichen baugleiche modulare Einheiten zu schaffen, die mit Hilfe unterschiedlich gestalteter Oberschalen eine Variantenbildung für den Schalldämpfer ermöglichen. Die verschiedenen Oberschalen unterscheiden sich vor allem durch unterschiedliche Geometrien, die an unterschiedliche Einbausituationen angepasst sind. Hierdurch lässt sich der Schalldämpfer vergleichsweise einfach, nämlich nur durch Austauschen der Oberschale bzw. durch Auswählen einer geeigneten Oberschale an verschiedene Einbausituationen anpassen. Insbesondere lässt sich somit ein aktiver Schalldämpfer realisieren, der bei verschiedenen Fahrzeugtypen verwendet werden kann, wobei je nach Einbausituation lediglich unterschiedlich geformte Oberschalen zum Einsatz kommen. Diese Oberschalen lassen sich vergleichsweise preiswert herstellen, da sie im Wesentlichen nur die Funktion haben, den Innenraum des Schalldämpfers von der Umgebung des Schalldämpfers zu trennen. Somit dient die Oberschale im Wesentlichen nur zum Begrenzen des Rückvolumens des Lautsprechers. Außerdem lässt sich der Schalldämpfer zweckmäßig so montieren, dass sich die Oberschale an einer vom heißen Abgasstrang abgewandten Seite des Schalldämpfers befindet, so dass die Oberschale vorzugsweise aus einem vergleichsweise preiswerten Kunststoff hergestellt werden kann, der keine besonders hohe Temperaturbeständigkeit besitzen muss. Eine wesentliche Komponente des Schalldämpfers ist dabei zumindest der Lautsprecher.

Die vorliegende Erfindung präsentiert außerdem einen Bausatz zum Herstellen von aktiven Schalldämpfern der vorstehend beschriebenen Art. Ein derartiger Bausatz charakterisiert sich durch gleiche Unterschalen und unterschiedliche Oberschalen. Mithilfe der gleichen Unterschalen können weitgehend baugleiche modulare Einheiten geschaffen werden, die bis auf die Oberschale sämtliche wesentlichen Komponenten des Schalldämpfers umfassen, nämlich vorzugsweise den Lautsprecher und den Anschlussstutzen sowie - falls vorhanden - eine Druckausgleichsöffnung und/oder einen Kabelanschluss und/oder ein Mikrophon und/oder eine Steuerung. Die unterschiedlichen Oberschalen ermöglichen nun eine Anpassung des jeweiligen Schalldämpfers an unterschiedliche Einbausituationen. Hierzu besitzen sämtliche Oberschalen einen gleichbleibenden Randbereich und abgesehen davon quasi beliebig variierende Geometrien. Über den jeweiligen Randbereich wird dann eine Schnittstelle zum Montieren der jeweiligen Oberschale an der Unterschale geschaffen.

Eine erfindungsgemäße Abgasanlage für eine Brennkraftmaschine, vorzugsweise eines Kraftfahrzeugs, umfasst somit einen Abgas führenden Abschnitt und einen Schalldämpfer der vorstehend beschriebenen Art, wobei der Schallleitkanal des Schalldämpfers über den Anschlussstutzen des Schalldämpfers direkt oder indirekt, z.B. über ein Y-Rohr, mit dem Abgas führenden Abschnitt mechanisch und akustisch verbunden ist. Somit ist der Schalldämpfer stromauf einer in die Umgebung mündenden Austrittsöffnung der Abgasanlage angeordnet bzw. an die Abgasanlage angeschlossen. Insbesondere kann mithilfe des Anschlussstutzens eine gasdichte Anbindung des Schallleitkanals an den Abgas führenden Abschnitt der Abgasanlage realisiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen stark vereinfachten Längsschnitt durch einen aktiven Schalldämpfer
- Fig. 2: eine isometrische Ansicht einer Abgasanlage im Bereich eines derartigen aktiven Schalldämpfers,
- Fig. 3: einen Längsschnitt wie in Fig. 1, jedoch bei einer anderen Ausführungsform.

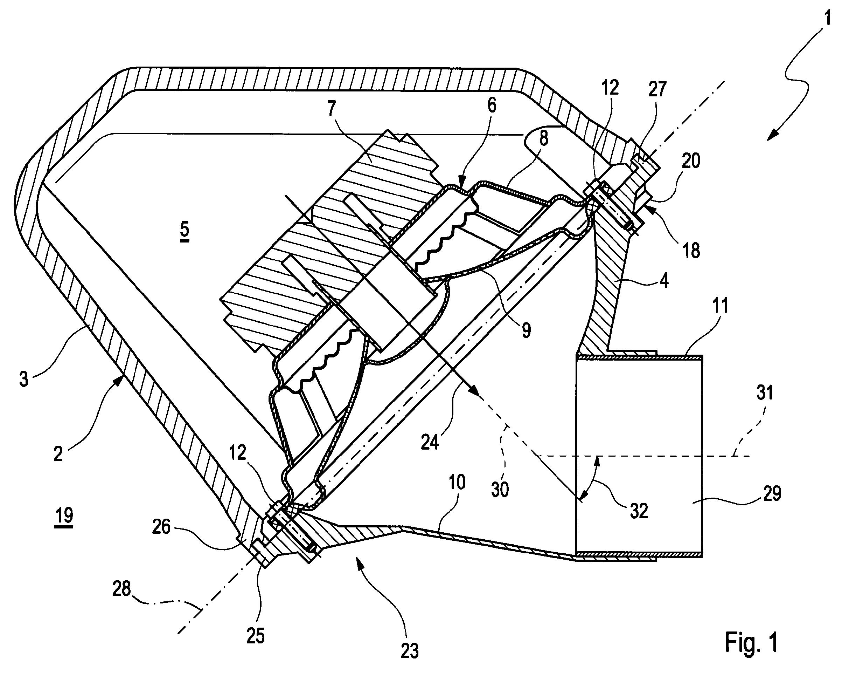

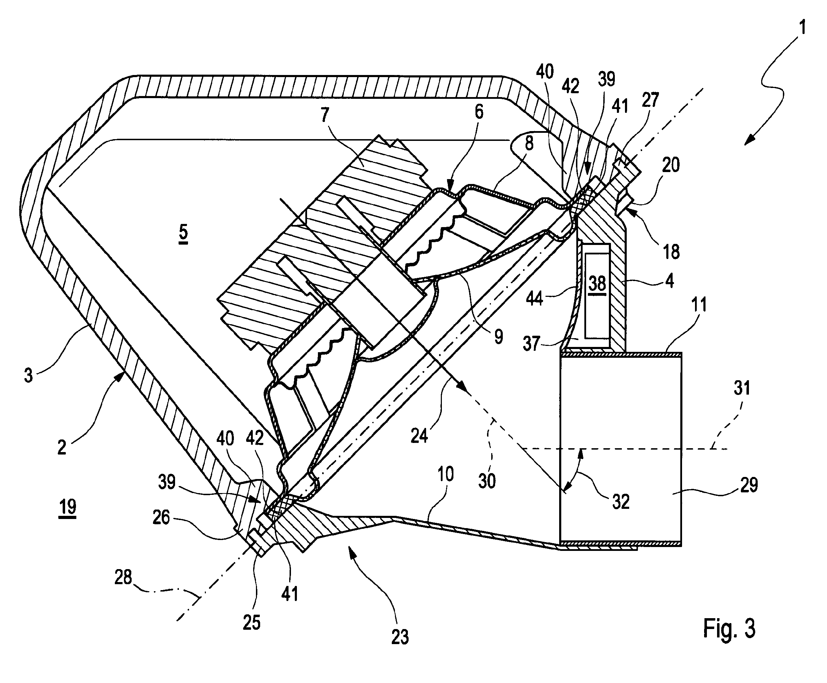

Entsprechend Figur 1 und 3 umfasst ein aktiver Schalldämpfer 1 ein Gehäuse 2, das eine Oberschale 3 und eine Unterschale 4 aufweist. Das Gehäuse 2 begrenzt dabei einen Innenraum 5, in dem ein Lautsprecher 6 angeordnet ist. Der Lautsprecher 6 umfasst in üblicher Weise einen elektromagnetischen Antrieb 7, einen Käfig 8 und eine Membran 9. Der Antrieb 7 treibt die Membran 9 zur Erzeugung von Druckpulsen bzw. Schallwellen an. Der Käfig 8 spannt zum einen die Membran 9 auf und trägt zum anderen den Antrieb 7.

Der Schalldämpfer 1 umfasst außerdem einen vorzugsweise trichterförmigen Schallleitkanal 10 sowie einen Anschlussstutzen 11. Der Schallleitkanal 10 verbindet die Membran 9 mit dem Anschlussstutzen 11 akustisch, also zur Übertragung von Luftschall. Beim hier vorgestellten Schalldämpfer 1 ist nun der Schallleitkanal 10 in der Unterschale 4 integral ausgeformt. Das bedeutetet, dass ein Bereich einer dem Innenraum 5 zugewandten Innenseite der Unterschale 4 den Schallleitkanal 10 definiert.

Wie sich Fig. 1 entnehmen lässt, ist der Lautsprecher 6 über seinen Käfig 8 ausschließlich an der Unterschale 4 befestigt. Hierzu können gemäß Fig. 1 zweckmäßig entsprechende Verschraubungen 12 verwendet werden. Ferner ist der Lautsprecher 6 zur Oberschale 3 kontaktfrei angeordnet.

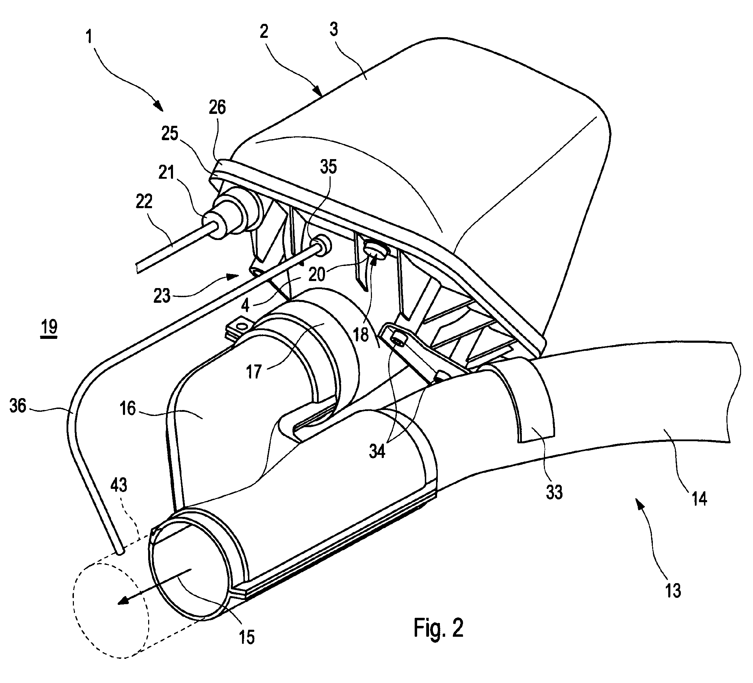

Entsprechend Fig. 2 eignet sich der Schalldämpfer 1 zur Montage an einer Abgasanlage 13, die in Figur 2 nur in einem Bereich dargestellt ist. Die Abgasanlage 13 gehört zu einer hier nicht gezeigten Brennkraftmaschine, die sich vorzugsweise in einem Kraftfahrzeug befindet. Der Schalldämpfer 1 ist an einen Abgas führenden Abschnitt 14 der Abgasanlage 13 akustisch angeschlossen, so dass also eine Übertragung von Luftschall vom Lautsprecher 6 auf bzw. in einen in Fig. 2 durch einen Pfeil angedeuteten Abgasstrom 15 möglich ist. Im Beispiel der Fig. 2 wird dieser Anschluss mit Hilfe eines Y-Rohrs 16 realisiert, das auf geeignete Weise einerseits in den Abschnitt 14 der Abgasanlage 13 eingebunden ist und das andererseits an den Anschlussstutzen 11 (vgl. Fig. 1) des Schalldämpfers 1 angeschlossen ist. Bspw. kann hierzu eine Schellenverbindung 17 verwendet werden.

Entsprechend den Figuren 1 bis 3 ist die Unterschale 4 zweckmäßig mit wenigstens einer Druckausgleichsöffnung 18 ausgestattet, die den Innenraum 5 mit einer Umgebung 19 des Gehäuses 2 verbindet. Die Druckausgleichsöffnung 18 ist dabei zweckmäßig mit einer Membran 20 verschlossen, die für Gas durchlässig und für Flüssigkeit undurchlässig ist. Auf diese Weise kann das Eindringen von Spritzwasser in den Innenraum 5 vermieden werden, während gleichzeitig der gewünschte Druckausgleich zwischen Innenraum 5 und Umgebung 19 möglich ist. Ferner kann sich im Innenraum 5 ausbildendes Kondensat, das im Innenraum bei entsprechender Erwärmung verdampft, aus dem Innenraum 5 durch die Druckausgleichsöffnung 18 in die Umgebung 19 entweichen. Die Membran 20 kann dabei in den Werkstoff der Unterschale 4 eingebettet sein, was hier jedoch nicht erkennbar ist. Die Unterschale 4 ist hier außerdem mit einem Kabelanschluss 21 ausgestattet, der im Beispiel als Kabeldurchführung realisiert ist, so dass ein Kabel 22 durch die Unterschale 4 zum Lautsprecher 6 geführt werden kann, mit dessen Hilfe der Lautsprecher 6 angesteuert werden kann.

Die Unterschale 4 ist zweckmäßig aus einem Kunststoff hergestellt, der mit Hilfe von Kurzglasfasern verstärkt ist. Hierdurch besitzt die Unterschale 4 eine hohe Formstabilität und Temperaturfestigkeit. Die Unterschale 4 eignet sich dadurch in besonderer Weise für die Integration einer Vielzahl von Komponenten des Schalldämpfers 1. Im Unterschied dazu ist die Oberschale 3 zweckmäßig aus einem einfachen, preiswerten Kunststoff hergestellt, dessen Steifigkeit und Temperaturfestigkeit geringer ist als die Steifigkeit und Temperaturfestigkeit der Unterschale 4.

Bevorzugt sind die hier gezeigten Ausführungsformen, bei welchen alle wesentlichen Komponenten des Schalldämpfers 1, abgesehen von der Oberschale 3, an der Unterschale 4 ausgebildet bzw. angeordnet sind, so dass die Unterschale 4 mit diesen Komponenten eine vormontierbare Einheit 23 bildet, die quasi modularen Charakter besitzt. Diese Einheit 23 kann nun vorzugsweise dadurch zum kompletten Schalldämpfer 1 vervollständigt werden, dass die Oberschale 3 daran angebaut wird. Somit lässt sich insbesondere ein Bausatz bzw. ein Baukastensystem realisieren, das identische Unterschalen 4 zur Realisierung identischer modularer Einheiten 23 sowie wenigstens zwei geometrisch unterschiedliche Oberschalen 3 umfasst.

Die Einheit 23 umfasst im Beispiel das Rohrstück 29, den Lautsprecher 6, die Druckausgleichsöffnung 18, den Kabelanschluss 21 und die Halterung 33.

Bei der hier gezeigten Ausführungsform sind der Lautsprecher 6 und die Oberschale 3 in derselben, in den Fig. 1 und 3 durch einen Pfeil angedeuteten Montagerichtung 24, an die Unterschale 4 angebaut. Bzgl. der Montagerichtung 24 ergibt sich somit für den Lautsprecher 6 und für die Oberschale 3 eine axiale Montage an der Unterschale 4. Zweckmäßig ist die Unterschale 4 mit einem geschlossen umlaufenden Flansch 25 ausgestattet, der bzgl. der Montagerichtung 24 von der übrigen Unterschale 4 radial nach außen absteht. Die Oberschale 3 weist an ihrem der Unterschale 4 zugewandten Ende einen geschlossen umlaufenden Rand 26 auf, dessen Umfangskontur komplementär zur Umfangskontur des Flansches 25 gestaltet ist. Die Oberschale 3 ist nun mit ihrem Rand 26 bzgl. der Montagerichtung 24 axial am Flansch 25 abgestützt und befestigt. Bspw. sind Oberschale 3 und Unterschale 4 mittels eines Reibschweißverfahrens miteinander verschweißt. Eine entsprechende, geschlossene umlaufende Schweißstelle ist in den Fig. 1 und 3 mit 27 bezeichnet.

Bei den hier gezeigten Ausführungsformen sind der Lautsprecher 6 und die Oberschale 3 am Flansch 25 in einer gemeinsamen Befestigungsebene 28 befestigt, wobei sich diese Befestigungsebene 28 radial zur Montagerichtung 24 erstreckt.

Der Anschlussstutzen 11 ist hier mit Hilfe eines separaten Rohrstücks 29 realisiert, das beabstandet zum Lautsprecher 6 an der Unterschale 4 angeordnet ist. Zweckmäßig ist das Rohrstück 29 dabei in die Unterschale 4 eingesetzt. Ebenso kann das Rohrstück 29 vom Werkstoff der Unterschale 4 umspritzt sein. Bemerkenswert ist außerdem, dass im Beispiel eine Abstrahlrichtung 30 des Lautsprechers 6, die in Fig. 1 durch eine unterbrochene Linie dargestellt ist, gegenüber einer Austrittsrichtung 31 des Anschlussstutzens 11, die in Figur 1 durch eine unterbrochene Linie angedeutet ist, um einen Winkel 32 geneigt ist, der im Beispiel etwa 45° beträgt.

Gemäß Fig. 2 ist außerdem eine Halterung 33 vorgesehen, mit welcher sich der Lautsprecher 1 an der Abgasanlage 13, hier an durchströmtem Abschnitt 14 abstützt, der hier durch ein Rohr gebildet ist. Diese Halterung 33 ist gehäuseseitig an der Unterschale 4 befestigt, bspw. mit Hilfe von Verschraubungen 34, so dass der Schalldämpfer 1 ausschließlich über die Unterschale 4 an der Abgasanlage 13 befestigt ist, nämlich über die Halterung 33 und den Anschlussstutzen 11.

Bei der In Fig. 3 gezeigten Ausführungsform kann zum Fixieren des Lautsprechers 6 im Gehäuse 2 bzw. an der Unterschale 4 auf die Verschraubungen 12 oder andere separate Befestigungselemente verzichtet werden, die bei der in Fig. 1 gezeigten Ausführungsform benötigt werden. Hierzu ist der Lautsprecher 6 mit Hilfe der Oberschale 3 gegen die Unterschale 4 geklemmt. Das bedeutet, dass erst durch das Befestigen der Oberschale 3 an der Unterschale 4, z.B. durch die Schweißverbindung 27, der Lautsprecher 6 an der Unterschale 4 festgelegt wird. Oberschale 3 und Unterschale 4 definieren dabei eine Klemmfixierung 39 für den Lautsprecher 6. Zweckmäßig übergreift hierzu eine Niederhalterkontur 40 der Oberschale 3 einen Außenrand 41 des Lautsprechers 6 bzw. des Käfigs 8. Die Niederhalterkontur 40 drückt bei an die Unterschale 4 angebauter Oberschale 3 besagten Außenrand 41 gegen eine Anlagefläche 42 der Unterschale 4. Die Niederhalterkontur 40 kann eine geschlossen umlaufende Schulter sein oder mehrere in der Umfangsrichtung verteilt angeordnete separate Niederhalter umfassen. Die Niederhalterkontur 40 ist im Beispiel der Fig. 3 integral an der Oberschale 3 ausgebildet. Auch hier ist eine Ausführungsform bevorzugt, bei welcher der Lautsprecher 6 außerhalb der Klemmfixierung 39 keinen Kontakt zur Oberschale 3 besitzt, so dass sich auch hier die vorstehend genannten Vorteile ergeben.

Vorteilhaft kann gemäß Fig. 2 vorgesehen sein, dass innen (nicht gezeigt) oder außen (gezeigt) an der Unterschale 4 ein Drucksensor 35, z.B. ein Mikrophon, angeordnet ist. Der Drucksensor 35 ist an eine Druckübertragungsleitung 36 angeschlossen, die bei an die Abgasanlage 13 angebautem Schalldämpfer 1 an einen mit unterbrochener Linie angedeuteten Abschnitt 43 der Abgasanlage 13 angeschlossen ist, der sich bezüglich der Abgasströmung 15 in der Abgasanlage 13 stromab des Anschlussstutzens 29 bzw. stromab des die Anschlussstelle definierenden Y-Rohrs 16 befindet. Die Druckübertragungsleitung 36, z.B. ein Schlauch oder ein Rohr, ermöglicht eine akustische Verbindung zwischen den Abgasströmungspfad der Abgasanlage 13 stromab des Anschlussstutzens 29 und dem Drucksensor 35. Die mit Hilfe des Drucksensors 35 erfassten Signale ermöglichen eine Kontrolle der Effektivität der durchgeführten Luftschallbeeinflussung bzw. Luftschalldämpfung, insbesondere nach Art einer Regelung. Durch die Unterbringung des Drucksensors 35 an oder in der Unterschale 4 kann die Funktionsdichte der Unterschale 4 vergrößert werden. Bei einer außerhalb des Lautsprechers 6 angeordneten Steuerung zum Ansteuern des Lautsprechers 6 können die elektrischen Signale des Drucksensors 35 durch dieselbe Verkabelung 22 geleitet werden, über die auch der Lautsprecher 6 angesteuert wird. Sofern jedoch wie bei der in Fig. 3 gezeigten Ausführungsform eine Steuerung 38 zum Ansteuern des Lautsprechers 6 im Gehäuse 2, vorzugsweise an oder in der Unterschale 4, untergebracht ist, erfolgt die Signalübertragung innerhalb des Schalldämpfers 1, was den Verkabelungsaufwand reduziert.

Gemäß Fig. 3 kann die Steuerung 38 zum Ansteuern des Lautsprechers 6 in einer Kavität 37 angeordnet sein, die an einer dem Innenraum 5 des Gehäuses 2 bzw. dem Lautsprecher 6 zugewandten Innenseite der Unterschale 4 ausgebildet ist. Vorzugsweise ist eine Öffnung der Kavität 37 durch einen Deckel 44 verschlossen, der als Hitzeschutz ausgestaltet ist und zum Beispiel aus einem Metall bzw. aus einer Metalllegierung besteht. Beispielsweise ist besagte Kavität 37 in eine den Schalleitkanal 10 begrenzende Wand eingelassen. Der Deckel 44 bildet dann vorzugsweise einen Abschnitt dieser Wand.

## Patentansprüche

1. Aktiver Schalldämpfer für eine Abgasanlage (13) einer Brennkraftmaschine,
- mit einem Gehäuse (2), das eine Oberschale (3) sowie eine Unterschale (4) aufweist und das einen Innenraum (5) begrenzt,
- mit einem Lautsprecher (6), der im Innenraum (5) angeordnet ist,
- mit einem Schallleitkanal (10), der eine Membran (9) des Lautsprechers (6) mit einem Anschlussstutzen (11) akustisch verbindet, der zum mechanischen und akustischen Verbinden des Schallleitkanals (10) mit einem Abgas führenden Abschnitt (14) der Abgasanlage (13) ausgestaltet ist,
wobei der Schallleitkanal (10) in der Unterschale (4) integral ausgeformt ist,
**dadurch gekennzeichnet,**
**dass** die Unterschale (4) einen Kabelanschluss (21) aufweist, über den der Lautsprecher (6) ansteuerbar ist.

2. Schalldämpfer nach Anspruch 1,
**dadurch gekennzeichnet,**
**dass** der Lautsprecher (6) an der Unterschale (4) befestigt ist.

3. Schalldämpfer nach Anspruch 1 oder 2,
**dadurch gekennzeichnet,**
**dass** der Lautsprecher (6) zwischen der Oberschale (3) und der Unterschale (4) geklemmt ist, oder
**dass** der Lautsprecher (6) kontaktfrei zur Oberschale (3) angeordnet ist.

4. Schalldämpfer nach einem der Ansprüche 1 bis 3,
**dadurch gekennzeichnet,**
**dass** die Unterschale (4) wenigstens eine Druckausgleichsöffnung (18) aufweist, die den Innenraum (5) mit einer Umgebung (19) des Gehäuses (2) verbindet, wobei insbesondere vorgesehen sein kann,
**dass** die jeweilige Druckausgleichsöffnung (18) mit einer gasdurchlässigen und flüssigkeitsdichten Membran (20) verschlossen ist, die in den Werkstoff der Unterschale (4) eingebettet ist.

5. Schalldämpfer nach einem der Ansprüche 1 bis 4,
**dadurch gekennzeichnet,**
**dass** die Unterschale (4) aus einem verstärkten Kunststoff hergestellt ist, und/oder
**dass** die Oberschale (3) aus einem Kunststoff hergestellt ist.

6. Schalldämpfer nach einem der Ansprüche 1 bis 5,
**dadurch gekennzeichnet,**
**dass** die Unterschale (4) abgesehen von der Oberschale (3) alle wesentlichen Komponenten des Schalldämpfers (1) aufweist und mit diesem eine vormontierbare Einheit (23) bildet, die durch Anbringen der Oberschale (3) zum Schalldämpfer (1) komplettierbar ist.

7. Schalldämpfer nach einem der Ansprüche 1 bis 6,
**dadurch gekennzeichnet,**
**dass** der Lautsprecher (6) und die Oberschale (3) in derselben Montagerichtung (24) an die Unterschale (4) angebaut sind.

8. Schalldämpfer nach einem der Ansprüche 1 bis 7,
**dadurch gekennzeichnet,**
**dass** die Unterschale (4) einen geschlossen umlaufenden Flansch (25) aufweist, der bzgl. einer Montagerichtung (24), in welcher der Lautsprecher (6) an die Unterschale (4) angebaut ist, radial nach außen absteht und an dem die Oberschale (3) mit einem geschlossen umlaufenden Rand (26) bzgl. der Montagerichtung (24) axial abgestützt und befestigt ist.

9. Schalldämpfer nach einem der Ansprüche 1 bis 8,
**dadurch gekennzeichnet,**
**dass** an der Unterschale (4) ein Drucksensor (35) angeordnet ist, der über eine Druckübertragungsleitung (36) an einen Abschnitt (43) der Abgasanlage (13) anschließbar ist.

10. Schalldämpfer nach einem der Ansprüche 1 bis 9,
**dadurch gekennzeichnet,**
**dass** die Unterschale (4) an ihrer Innenseite eine Kavität (37) aufweist, in der eine Steuerung (38) zum Ansteuern des Lautsprechers (6) angeordnet ist.

11. Schalldämpfer nach einem der Ansprüche 1 bis 10,
**dadurch gekennzeichnet,**
**dass** der Anschlussstutzen (11) durch ein separates Rohrstück (29) gebildet ist, das beabstandet zum Lautsprecher (6) an der Unterschale (4) angeordnet ist.

12. Bausatz zum Herstellen von aktiven Schalldämpfern (1) nach einem der Ansprüche 1 bis 11,
**gekennzeichnet durch** gleiche Unterschalen (4) und verschiedene Oberschalen (3).

13. Abgasanlage für eine Brennkraftmaschine, vorzugsweise eines Kraftfahrzeugs,
mit einem Abgas führenden Abschnitt (14) und mit einem Schalldämpfer (1) nach einem der Ansprüche 1 bis 11, dessen Schallleitkanal (10) über den Anschlussstutzen (11) mit dem Abgas führenden Abschnitt (14) mechanisch und akustisch verbunden ist.

14. Abgasanlage nach Anspruch 13,
**dadurch gekennzeichnet,**
**dass** die Oberschale (3) und/oder die Unterschale (4) keinen direkten Kontakt zum Abgas führenden Abschnitt (14) der Abgasanlage (14) aufweist/aufweisen.

## Claims

1. Active silencer for an exhaust system (13) of an internal combustion engine, comprising:
- a housing (2) which comprises an upper shell (3) and a lower shell (4) and defines an inner chamber (5);
- a loudspeaker (6) which is arranged in the inner chamber (5);
- a sound conduction channel (10) which acoustically connects a membrane (9) of the loudspeaker (6) to a connecting piece (11) which is designed for mechanically and acoustically connecting the sound conduction channel (10) to an exhaust-gas guiding portion (14) of the exhaust system (13),
the sound conduction channel (10) being integrally formed in the lower shell (4), **characterised in that** the lower shell (4) comprises a cable connection (21) via which the loudspeaker (6) can be actuated.

2. Silencer according to claim 1, **characterised in that** the loudspeaker (6) is fastened to the lower shell (4).

3. Silencer according to either claim 1 or claim 2, **characterised in that** the loudspeaker (6) is clamped between the upper shell (3) and the lower shell (4), or **in that** the loudspeaker (6) is arranged without being in contact with the upper shell (3).

4. Silencer according to any of claims 1 to 3, **characterised in that** the lower shell (4) comprises at least one pressure equalisation opening (18) which connects the inner chamber (5) to a region (19) surrounding the housing (2), it being possible to provide in particular for each pressure equalisation opening (18) to be closed with a gaspermeable and liquid-tight membrane (20) which is embedded in the material of the lower shell (4).

5. Silencer according to any of claims 1 to 4, **characterised in that** the lower shell (4) is made from a reinforced plastics material, and/or **in that** the upper shell (3) is made from a plastics material.

6. Silencer according to any of claims 1 to 5, **characterised in that** the lower shell (4) comprises all the essential components of the silencer (1), with the exception of the upper shell (3), and forms with these essential components a pre-assemblable unit (23) which can be completed to form the silencer (1) by mounting the upper shell (3) thereon.

7. Silencer according to any of claims 1 to 6, **characterised in that** the loudspeaker (6) and the upper shell (3) are attached to the lower shell (4) in the same mounting direction (24).

8. Silencer according to any of claims 1 to 7, **characterised in that** the lower shell (4) comprises a closed circumferential flange (25) which projects radially outwardly relative to a mounting direction (24), in which the loudspeaker (6) is attached to the lower shell (4), and on which circumferential flange the upper shell (3) is axially supported and fastened relative to the mounting direction (24) by means of a closed circumferential edge (26).

9. Silencer according to any of claims 1 to 8, **characterised in that** a pressure sensor (35) is arranged on the lower shell (4), which pressure sensor can be connected to a portion (43) of the exhaust system (13) via a pressure transmission line (36).

10. Silencer according to any of claims 1 to 9, **characterised in that** the interior of the lower shell (4) comprises a cavity (37) in which a control unit (38) for actuating the loudspeaker (6) is arranged.

11. Silencer according to any of claims 1 to 10, **characterised in that** the connecting piece (11) is formed by a separate pipe section (29) which is arranged on the lower shell (4) so as to be spaced apart from the loudspeaker (6).

12. Kit for manufacturing active silencers (1) according to any of claims 1 to 11, **characterised by** identical lower shells (4) and different upper shells (3).

13. Exhaust system for an internal combustion engine, preferably for a motor vehicle, comprising an exhaust-gas guiding portion (14) and a silencer (1) according to any of claims 1 to 11, the sound conduction channel (10) of which is mechanically and acoustically connected to the exhaust-gas guiding portion (14) via the connecting piece (11).

14. Exhaust system according to claim 13, **characterised in that** the upper shell (3) and/or the lower shell (4) are not in direct contact with the exhaust-gas guiding portion (14) of the exhaust system (14).

## Revendications

1. Silencieux actif pour une installation d'échappement de gaz (13) d'un moteur à combustion interne, comprenant :
- un boîtier (2) qui présente une coque supérieure (3) et une coque inférieure (4) et délimite un espace interne (5),
- un haut-parleur (6) qui est aménagé dans l'espace interne (5), et
- un canal de conduction acoustique (10) qui relie au plan acoustique une membrane (9) du haut-parleur (6) à un raccord (11) qui est conçu pour assurer une liaison mécanique et acoustique du canal de conduction acoustique (10) avec une section (14) de l'installation d'échappement de gaz (13) acheminant les gaz d'échappement,
dans lequel le canal de conduction acoustique (10) est conçu d'un seul tenant dans la coque inférieure (4),
**caractérisé en ce que** :
la coque inférieure (4) présente un raccord de câble (21) via lequel le haut-parleur (6) peut être commandé.

2. Silencieux selon la revendication 1,
**caractérisé en ce que** :
le haut-parleur (6) est fixé à la coque inférieure (4).

3. Silencieux selon la revendication 1 ou la revendication 2,
**caractérisé en ce que** :
le haut-parleur (6) est bloqué entre la coque supérieure (3) et la coque inférieure (4) ou
le haut-parleur (6) est aménagé sans contact avec la coque supérieure (3).

4. Silencieux selon l'une quelconque des revendications 1 à 3,
**caractérisé en ce que** :
la coque inférieure (4) présente au moins une ouverture compensatrice de pression (18) qui relie l'espace interne (5) à un environnement (19) du boîtier (2), dans lequel il peut être prévu en particulier :
que l'ouverture compensatrice de pression respective (18) soit fermée par une membrane (20) étanche aux gaz et étanche aux liquides qui est noyée dans le matériau de la coque inférieure (4).

5. Silencieux selon l'une quelconque des revendications 1 à 4,
**caractérisé en ce que** :
la coque inférieure (4) est constituée d'une matière plastique renforcée et/ou
la coque supérieure (3) est constituée d'une matière plastique.

6. Silencieux selon l'une quelconque des revendications 1 à 5,
**caractérisé en ce que** :
la coque inférieure (4) présente en dehors de la coque supérieure (3) tous les composants essentiels du silencieux (1) et forme avec cette dernière une unité pré-montable (23) qui peut être complétée par installation de la coque supérieure (3) sur le silencieux (1).

7. Silencieux selon l'une quelconque des revendications 1 à 6,
**caractérisé en ce que** :
le haut-parleur (6) et la coque supérieure (3) sont appliqués dans la même direction de montage (24) sur la coque inférieure (4).

8. Silencieux selon l'une quelconque des revendications 1 à 7,
**caractérisé en ce que** :
la coque inférieure (4) présente une bride périphérique fermée (25) qui s'écarte éventuellement radialement d'une direction de montage (24), dans laquelle le haut-parleur (6) est installé sur la coque inférieure (4), vers l'extérieur et sur laquelle la coque inférieure (3) s'appuie et se fixe axialement avec un bord périphérique fermé (26) par rapport à la direction de montage (24).

9. Silencieux selon l'une quelconque des revendications 1 à 8,
**caractérisé en ce que** :
l'on aménage sur la coque inférieure (4) un capteur de pression (35) qui peut être raccordé à une section (43) de l'installation d'échappement de gaz (13) via une conduite de transmission de pression (36).

10. Silencieux selon l'une quelconque des revendications 1 à 9,
**caractérisé en ce que** :
la coque inférieure (4) présente sur sa face intérieure une cavité (37) dans laquelle est aménagée une commande (38) pour commander le haut-parleur (6).

11. Silencieux selon l'une quelconque des revendications 1 à 10,
**caractérisé en ce que** :
le raccordement (11) est formé par un tronçon de tube séparé (29) qui est aménagé à distance du haut-parleur (6) sur la coque inférieure (4).

12. Jeu de pièces pour la fabrication de silencieux actifs (1) selon l'une quelconque des revendications 1 à 11,
**caractérisé par** des coques inférieures identiques (4) et des coques supérieures différentes (3).

13. Installation d'échappement de gaz pour un moteur à combustion interne, de préférence d'un véhicule automobile,
avec une section conductrice de gaz d'échappement (14) et un silencieux (1) selon l'une quelconque des revendications 1 à 11, dont le canal de conduction acoustique (10) est relié au plan mécanique et acoustique à la section conductrice de gaz d'échappement (14) via un raccord (11).

14. Installation d'échappement de gaz selon la revendication 13,
**caractérisé en ce que** :
La coque supérieure (3) et/ou la coque inférieure (4) de présente(nt) pas de contact direct avec la section conductrice de gaz d'échappement (14) de l'installation d'échappement de gaz (14).
